# EUROPEAN PATENT APPLICATION

(11) **EP 3 138 656 A1**
(43) Date of publication of application: **08.03.2017**
(21) Application number: 16186670.2
(22) Date of filing: 31.08.2016
(51) Int. Cl.: B23K 26/08, B23Q 1/01, B23Q 1/44

(54) **LASER CUTTING MACHINE WITH A MOBIL CUTTING AREA**

(30) Priority: 07.09.2015 TR 201511112
(71) Applicant: Durmazlar Makina Sanayi Ve Ticaret Anonim Sirketi, Nilüfer Bursa (TR)
(72) Inventor: ARDA, Altan, BURSA (TR); DÖNMEZ, Recep, BURSA (TR); ÇOLAK, slam, BURSA (TR)
(74) Representative: Dereligil, Ersin

(57) **Abstract**

The invention relates to a laser cutting machine used in cutting of metal sheet materials having varying dimensions. The cutting machine allows the cutting area, which is defined by the possible positions of the laser working head controlled by the motions of the X, Y, and Z axes motion bodies (10,20,30), to be moved to a different position. The movement is enabled by an additional movement of an U axis motion body (40) wherein the U axis is defined in the same direction with the Y axis in addition to the X, Y, and Z axes.

## Description

### TECHNICAL FIELD

The invention relates to laser cutting machines used in cutting sheet metal plate materials.

The invention particularly relates to a laser cutting machine used in cutting of sheet metal plate materials in various dimensions, improving machine efficiency, and enabling cutting in two dimensions and unlimited geometry.

### STATE OF THE ART

Nowadays, cutting operations of metal sheet materials made of metals such as steel, aluminium etc. are made by laser cutting machines. Laser cutting machines are machines that cut metal sheets or other materials made of metal via laser beams.

In the prior art, dimensions of metal sheets that users work on, may vary according to needs. In such cases, laser cutting machines of different capacities are used with metal sheet materials of different dimensions. As a result of this, when the dimensions of the metal sheet material to be processed are bigger than the capacity of the laser cutting machine used, the laser cutting machine becomes inadequate, and thus cutting operation cannot be made. Also, in situations where the size of the metal sheet material to be processed is small and the laser cutting machine used is big, unnecessary energy consumption occurs. On the other hand, possession of both machines causes disadvantages in terms of cost and use of space.

Some documents are encountered in the research made about the known status of the art. The document with publication No. EP1683601B1 relates to a method for cutting raw sheet metal and a laser cutting machine for application of this method. In this invention, metal sheet materials are loaded outside the cutting area and then taken to the cutting area. The cutting area is a stationary area. However, in our invention, the cutting area is mobile. In this way, substantial saving is obtained from time by means of loading unlimited number of sheet metals onto the loading area with unlimited geometry, and cutting the sheet metals by moving the cutting area. In our invention, while the machine performs continuous cutting, at the same time sheet metal can be loaded and unloaded at another area. In this way, there would be no loss of time with the machine.

In the document with publication No. EP1673195B1, a laser processing mechanism is disclosed, which comprises integrated workpiece loading/unloading and movable laser cutting units mounted on the same track. In this invention, during operation of the machine, only one loading of the metal sheet material can be made with the suitable dimension according to the capacity of the machine. This situation causes slows down the cutting operation. However, in our invention, more than one metal plate can be loaded on the machine at the same time and kept ready for cutting. The metal sheets loaded with the movement of the cutting area with unlimited geometry can be cut in turn and the cut metal sheets can be unloaded. Moreover, in our invention, while metal sheets are positioned on the cutting table, at the same time, cut metal sheets can be unloaded. In similar machine types, loading and unloading cannot be made at the same time. In similar machines, first, cut metal sheet is unloaded, and then the metal sheet to be cut is loaded. And this causes loss of time.

As a result, improvement is to be made in laser cutting machines enabling cutting of metal sheet materials with varying dimensions, and therefore novel embodiments that would eliminate the above said drawbacks and bring solutions to the problems of the prior art systems are needed.

### PURPOSE OF THE INVENTION

The invention relates to a laser cutting machine enabling cutting metal sheet materials with varying dimensions, which meets the above said requirements, eliminate all of the drawbacks, and bring some additional advantages.

The main purpose of the invention is to allow cutting metal sheet materials with different dimensions on the same machine.

A purpose of the invention is to avoid the unnecessary energy consumption that occurs during cutting small-sized metal sheet materials on big-sized cutting machines.

Another purpose of the invention is to provide saving from space and time by enabling cutting of all kinds of metal sheet materials on a single machine.

In order to achieve the above said purposes which would be understood better with the below given detailed description, the present invention is a laser cutting machine used in cutting of metal sheet materials having varying dimensions, and enabling cutting of metal sheet materials in unlimited geometry in two dimensions, and comprising:
- a Z axis motion body on which a cutting head is positioned,
- a Y axis motion body, on which the Z axis motion body is positioned, and which enables the Z axis motion body to move on Y axis,
- an X axis motion body, on which the Y axis motion body is positioned, and which enables the Y axis motion body to move on X axis;
and it is characterized in that; it comprises:
- a U axis motion body, on which the X axis motion body is positioned, and which is defined on the same axis with the X axis motion body or the Y axis motion body,
- a carrier body, which is positioned between the X axis motion body and U axis motion body, and together with the X axis motion body which enables movement of the Y axis motion body and Z axis motion body on U axis.

In a preferred embodiment of the invention, the movement of the carrier body is ensured by means of a control unit.

The structural and characteristic features of the invention and all of its advantages shall be understood better with the figures and the detailed description given below in reference to the figures. Therefore, the assessment should be made by taking into account the said figures and detailed explanations.

### BRIEF DESCRIPTION OF THE FIGURES

For better understanding of the embodiment of the present invention and its advantages with its additional components, it should be evaluated together with below described figures.
Figure 1 is a general perspective view of the laser cutting machine according to the invention.
Figure 2 is another perspective view of the laser cutting machine according to the invention.
Figure 3 is a detailed perspective view of the laser cutting machine according to the invention.

### REFERENCE NUMBERS

10. X axis motion body
20. Y axis motion body
30. Z axis motion body
40. U axis motion body
41. Carrier tracks
50. Carrier body
60. Control unit

### DETAILED DESCRIPTION OF THE INVENTION

In this detailed description, the preferred embodiments of the laser cutting machine according to the invention are only disclosed for better understanding of the subject without forming any limiting effect.

The invention is a laser cutting machine used in cutting of metal sheet materials having varying dimensions, and enabling cutting of metal sheet materials in unlimited geometry in two dimensions, and comprising:
- a Z axis motion body (30) on which a cutting head is positioned,
- a Y axis motion body (20), on which the Z axis motion body (30) is positioned, and which enables the Z axis motion body (30) to move on Y axis,
- an X axis motion body (10), on which the Y axis motion body (20) is positioned, and which enables the Y axis motion body (20) to move on X axis;
and it is characterized in that; it comprises:
- a U axis motion body (40), on which the X axis motion body (10) is positioned, and which is defined on the same axis with the X axis motion body (10) or the Y axis motion body (20),
- a carrier body (50), which is positioned between the X axis motion body (10) and U axis motion body (40), and together with the X axis motion body (10) which enables movement of the Y axis motion body (20) and Z axis motion body (30) on U axis.

In the most general sense, the laser cutting machine according to the invention shown in the figures from different angles comprises an X axis motion body (10), a Y axis motion body (20), and a Z axis motion body (30) enabling the basic movements of the laser cutting head; a U axis motion body (40) enabling movement of these axis bodies in unlimited length; and a carrier body (50) enabling positioning and movement of these axis bodies (10, 20, 30) on the U axis body (40).

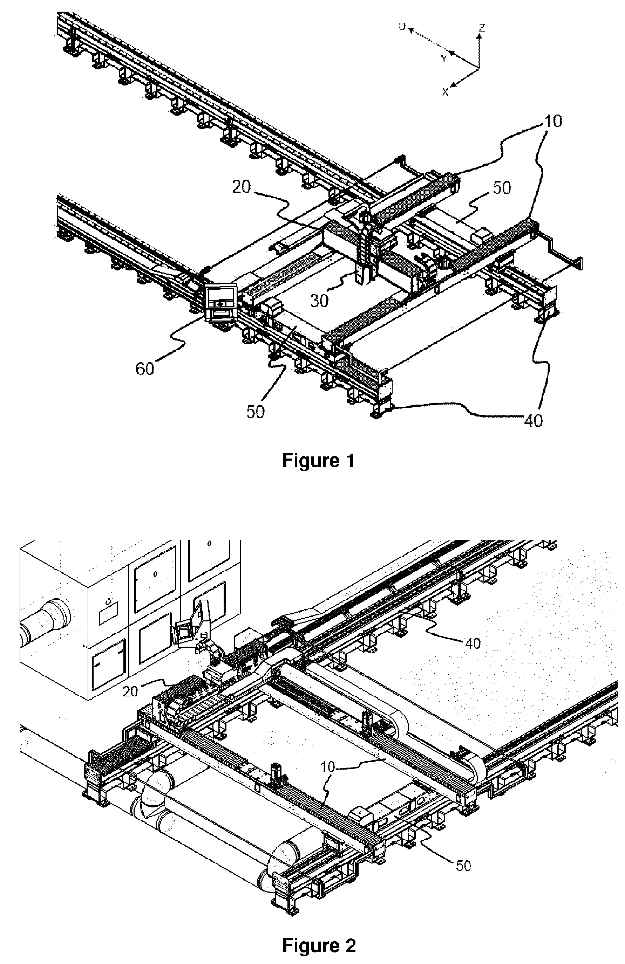

Figure 1 shows a general view of the laser machine according to the invention. The upper part of the machine is formed of the X axis motion body (10), Y axis motion body (20), and Z axis motion body (30), which are used in the prior art, and on which the cutter laser head is positioned and moved.

The cutter laser head is positioned on Z axis motion body (30). The Z axis motion body (30) moves vertically up and down. The Z axis motion body (30) is positioned on the Y axis motion body (20) and can move on the Y axis in connection with the Y axis motion body (20).

As disclosed hereinabove, the Y axis motion body (20) enables movement of the Z axis motion body (30) on Y axis. The Y axis motion body (20) is positioned on the X axis motion body (10) and can move on the X axis in connection with the X axis motion body (10). With this motion, the Z axis motion body (30) also indirectly moves on the X axis.

The X axis motion body (10) carries the Y axis motion body (20) and Z axis motion body (30), and basically enables the Z axis motion body (30), on which the laser cutting head is positioned, to move on the X axis.

Figure 2 shows a closer view of the laser cutting machine according to the invention. As can be seen, the X axis motion body (10) is positioned on a U axis motion body (40). The U axis motion body (40) is the main carrier of the whole machine system. The U axis is in the same direction with the Y axis and it can be defined in unlimited length independent from the Y axis motion body (20). While the U axis can be chosen in the direction of the Y axis, it can also be chosen to be in the direction in the X axis.

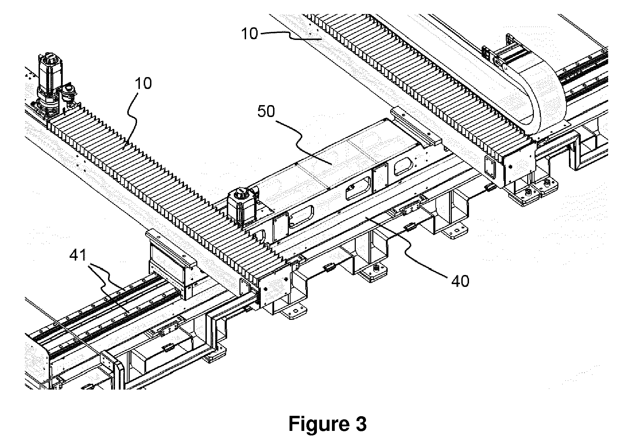

A carrier body (50) is positioned between the X axis motion body (10) and the U axis motion body (40) in order to allow movement of the X axis motion body (10) on the U axis motion body (40). As can be seen from Figure 3, the carrier body (50) on which the X axis motion body (10) is positioned, allows movement via carrier tracks (41) found on the U axis motion body (40). By means of the carrier body (50), the laser cutting machine is enabled to operate on both long axis and short axis.

The laser cutting machine is controlled by the control unit (60). The carrier body (50) moves with the command given from the control unit (60) and changes the operating type of the laser cutting machine. The carrier body (50) can move all the equipment found thereon on the U axis motion body (40). In this way, the laser cutter head performing the cutting operation and positioned on the Z axis motion body (30) gains movement capability in the U axis, in addition to the X, Y, and Z axes.

The laser cutting machine according to the invention operates only on X, Y, and Z axes during cutting of small-sized metal sheet materials. During cutting of bigger metal sheet materials, the Z axis motion body (30) is fixed on the Y axis motion body (20). The Z axis motion body (30) is preferably fixed at a central position on the Y axis motion body (20). In this case, the laser cutting machine becomes active on X, U, and Z axes and performs cutting operation.

When the U axis motion body (40) is active, the Z axis motion body (30) preferably moves only in vertical direction. If desired, while the machine is moving on the U axis motion body (40), the Z axis motion body (30) can also move on the Y axis motion body (20).

The laser cutting machine according to the invention basically enables cutting of both small-sized and bigger metal plate materials on the same machine. In the machine according to the invention, the type of the mechanisms cutting small-sized and bigger sized metal plate materials can be switched, if desired. In this way, cutting of metal plate materials of all sizes can be achieved with a single machine. By means of switching between the mechanisms, consumption of unnecessary energy is prevented while cutting small-sized metal plates.

## Claims

1. A laser cutting machine used in cutting of metal sheet materials having varying dimensions, and enabling cutting of metal sheet materials in unlimited geometry in two dimensions, and comprising:
- a Z axis motion body (30) on which a cutting head is positioned,
- a Y axis motion body (20), on which the Z axis motion body (30) is positioned, and which enables the Z axis motion body (30) to move on Y axis,
- an X axis motion body (10), on which the Y axis motion body (20) is positioned, and which enables the Y axis motion body (20) to move on X axis;
and it is **characterized in that**; it comprises:
- a U axis motion body (40), on which the X axis motion body (10) is positioned, and which is defined on the same axis with the X axis motion body (10) or the Y axis motion body (20),
- a carrier body (50), which is positioned between the X axis motion body (10) and U axis motion body (40), and together with the X axis motion body (10) which enables movement of the Y axis motion body (20) and Z axis motion body (30) on U axis.

2. The laser cutting machine according to Claim 1, **characterized in that**; it comprises a control unit (60) enabling movement of the carrier body (50).
